# EUROPÄISCHE PATENTSCHRIFT

(11) **EP 2 189 780 B1**
(45) Veröffentlichungstag und Bekanntmachung des Hinweises auf die Patenterteilung: **07.08.2019**
(21) Anmeldenummer: 09011436.4
(22) Anmeldetag: 07.09.2009
(51) Int. Cl.: G01N 3/00, G01N 3/42

(54) **Vorrichtung und Verfahren zur Messung mechanischer Eigenschaften von Materialien**
Device and method for measuring mechanical characteristics of materials
Dispositif et procédé de mesure de propriétés mécaniques de matériaux

(30) Priorität: 20.11.2008 DE 102008058369
(43) Veröffentlichungstag der Anmeldung: 26.05.2010
(73) Patentinhaber: Helmut Fischer GmbH Institut für Elektronik und Messtechnik, 71069 Sindelfingen (DE)
(72) Erfinder: Scherzinger, Bernhard, 73734 Esslingen (DE); Vollmar, Hans-Peter, Dr., 70599 Stuttgart (DE); Wolf, Thomas, 76137 Karlsruhe (DE)
(74) Vertreter: Maser, Jochen

(56) Entgegenhaltungen:
- CA-A1- 1 152 774
- DE-A1-102006 052 153
- GB-A- 571 850
- GB-A- 2 322 708
- US-A- 3 524 343

## Beschreibung

Die Erfindung betrifft eine Vorrichtung und ein Verfahren zur Messung mechanischer Eigenschaften von Materialien mit einem Eindringkörper, der eine vorbestimmte Geometrie aufweist, sowie mit einer Einrichtung zur Krafterzeugung, mit der der Eindringkörper in eine zu messende Materialoberfläche eindringt und mit einer Einrichtung zur Messung der Eindringtiefe.

Aus der DE 10 2006 052 153 A1 geht eine solche Vorrichtung und ein Verfahren zur Messung von mechanischen Eigenschaften von Materialien hervor. Dabei ist vorgesehen, dass die Einrichtung zur Krafterzeugung und die Einrichtung zur Messung der Eindringtiefe durch einen ersten und zweiten Kammantriebsaktuator vorgesehen sind, wobei der Kammantriebsaktuator zwei Kammelektroden aufweist, die jeweils eine Vielzahl von parallel zueinander ausgerichteten Kammfingern derart umfasst, dass die Kammfinger der beiden Kammelektroden sich in Abhängigkeit von einer angelegten elektrischen Spannung teilweise überlappen. Dadurch soll eine erhöhte Auflösung der Krafterzeugung und eine erhöhte Auflösung der Messung der Eindringtiefe ermöglicht werden, welche zudem unempfindlich gegenüber den zu messenden Materialien und Werkstoffen ist. Bei dieser Vorrichtung ist ein erster Kammantriebsaktuator als ein lateraler Kammantriebsaktuator vorgesehen und derart ausgerichtet, dass eine Bewegung des beweglichen Kammfingers parallel zu seiner Ausrichtung zu einer Bewegung des Eindringkörpers senkrecht zur Materialoberfläche führt. Der weitere Kammantriebsaktuator ist als transversaler Kammantriebsaktuator vorgesehen und derart ausgerichtet, dass der Eindringkörper transversal zur Materialoberfläche verschiebbar ist. Die Anordnung und Ausgestaltung einer solchen Vorrichtung ist sehr aufwändig. Gleichzeitig kann eine gegenseitige Beeinflussung des lateralen Kammantriebsaktuators und des transversalen Kammantriebsaktuators während der Messung von mechanischen Eigenschaften von Materialien auftreten, wodurch eine Beeinträchtigung der Messgenauigkeit gegeben ist.

Aus der GB 571 850 A geht eine Härtetestmaschine hervor, bei welcher ein Bohrwerkzeug auf einen zu prüfenden Gegenstand aufgesetzt und durch eine mehrfache Drehbewegung angetrieben und gleichzeitig in die Oberfläche des Messgegenstandes eingetrieben wird. Daraus wird die Härte des Materials abgeleitet.

Aus der US 3,524,343 A geht eine analoge Messvorrichtung zur zuvor beschriebenen Messvorrichtung hervor.

Aus der CA 1 152 774 A1 geht eine Messvorrichtung zur Erfassung des Eindringwiderstandes und des Scherwiderstandes im Erdreich hervor, bei welchen ein erstes Messmittel zum Aufbringen der Eindringkraft und ein zweites Messmittel zum Erfassen eines aufgebrachten Drehmomentes zum Drehen des Schaftes in das Erdreich vorgesehen ist, wobei der Schaft für das Eindringen und die Drehbewegung durch eine gemeinsame Spiralfeder angetrieben werden.

Aus der GB 2 322 208 A geht eine Vorrichtung zur Erfassung der Oberflächeneigenschaften hervor, welche erste Mittel zum Eindringen in die Messoberfläche und wenigstens weitere Mittel zum Aufbringen eines Drehmomentes auf den in das zu prüfende Material eingedrungenen Eindringkörper umfasst.

Der Erfindung liegt deshalb die Aufgabe zugrunde, eine Vorrichtung und ein Verfahren zur Messung mechanischer Eigenschaften von Materialien zu schaffen, welche einen konstruktiv einfachen Aufbau aufweisen und eine erhöhte Messgenauigkeit zur Ermittlung von mechanischen Eigenschaften von Materialien ermöglichen.

Diese Aufgabe wird erfindungsgemäß durch eine Vorrichtung nach Anspruch 1 gelöst, bei der der Eindringkörper zwischen einem Krafteinleitungsabschnitt des Eindringkörpers, an dem die Einrichtung zur Krafterzeugung angreift und einen Schaft des Eindringkörpers zumindest einen mikromechanischen Bewegungsaktuator aufweist, durch den zumindest eine Drehbewegung des Schaftes gegenüber dem Kraftaufnahmeabschnitt des Eindringkörpers ansteuerbar oder erfassbar ist. Diese Anordnung weist den Vorteil auf, dass während dem Eindringen oder nach dem erfolgten Eindringen des Schaftes in der Materialoberfläche des Messgegenstandes der Schaft durch den mikromechanischen Bewegungsaktuator dreh-antreibbar ist, wobei die Kraft zur Einleitung der Drehung erfassbar oder die erfolgte Drehung gegenüber einer Ausgangsposition erfassbar ist und daraufhin in Abhängigkeit der ermittelten Kraft zur Einleitung der Eindringbewegung des Schaftes in die Materialoberfläche die mechanischen Eigenschaften des Materials bestimmt wird. Durch die Entkopplung der Drehbewegung beziehungsweise der radialen Auslenkung des Schaftes zur Eindringbewegung des Eindringkörpers senkrecht zur Materialoberfläche wird eine gegenseitige Beeinflussung der jeweils erfassten Werte minimiert oder eliminiert, wodurch eine verbesserte Messung oder Ermittlung der Materialeigenschaften ermöglicht ist.

Es ist dabei vorgesehen, dass die Einrichtung zur Messung der Eindringtiefe eine Auslenkung des Eindringkörpers senkrecht zur Messoberfläche an dem Schaft des Eindringkörpers erfasst. Dadurch kann der Eindringweg des Schaftes unmittelbar erfasst werden, der vorzugsweise zwischen dem Wegerfassungselement am Schaft und der Eindringspitze einen konstanten Abstand aufweist. Dadurch kann eine exakte Erfassung der Eindringtiefe ermöglicht werden. Eine Erfassung der Eindringbewegung am Krafteinleitungsabschnitt des Eindringkörpers könnte aufgrund des zwischengeschalteten mikromechanischen Bewegungsaktuators mit Fehlern beaufschlagt sein.

Nach einer bevorzugten Ausgestaltung der Erfindung ist vorgesehen, dass der mikromechanische Bewegungsaktuator als drehantreibbarer Kammantriebsaktuator ausgebildet ist. Dadurch können kleine Strukturen aufrechterhalten bleiben, um kleinbauende Eindringkörper auszubilden. Darüber hinaus wird die Messwerterfassung im Mikro- oder Nanobereich ermöglicht.

Nach einer bevorzugten Ausgestaltung des drehantreibbaren Kammantriebaktuators ist vorgesehen, dass dieser nach einem LIGA-Verfahren hergestellt oder als mikroelektromechanisches System (MEMS) ausgebildet sind. Dadurch können Aktuatoren mit einer hohen Auflösung und Präzision hergestellt werden. Darüber hinaus ist in einer einfachen Weise eine Messwerterfassung ermöglicht.

Die erfindungsgemäße Vorrichtung weist bevorzugt einen Eindringkörper auf, der zumindest zweiteilig ausgebildet ist, wobei zwischen dem Schaft und dem Krafteinleitungsabschnitt eine Drehkupplung vorgesehen ist, welche in der Längsachse des Eindringkörpers drucksteif und zur Längsachse drehbar ausgebildet ist. Dadurch können einerseits die während einem Messvorgang wirkenden Kräfte zum Eindringen des Schaftes in die Materialoberfläche übertragen und andererseits ein Drehantrieb des Schaftes relativ zum Krafteinleitungsabschnitt überlagert werden.

Die Drehkupplung des Eindringkörpers umfasst bevorzugt ein erstes Anschlusselement zur Aufnahme des Schaftes und ein zweites Anschlusselement zur Anordnung an dem Kraftaufnahmeabschnitt, wobei vorzugsweise das erste und zweite Anschlusselement durch ein oder mehrere über den Umfang verteilt angeordnete federelastische Verbindungsglieder radial verdrehbar und axial mit gleichbleibendem Abstand zueinander angeordnet sind. Dadurch wird sichergestellt, dass der zumindest zweiteilig ausgebildete Eindringkörper quasi wie ein einteiliger Eindringkörper wirkt, so dass eine exakte Messung der mechanischen Eigenschaften der Materialien ermöglicht ist.

Des Weiteren ist bevorzugt zwischen zwei federelastischen Verbindungsgliedern der Drehkupplung zumindest ein drehantreibbarer Kammantriebsaktuator vorgesehen. Dabei sind Kammfinger, welche zwischen jeweils zwei Kammelektroden angeordnet sind, jeweils leicht gekrümmt ausgebildet, so dass diese zu einer relativen Drehbewegung quasi parallel zueinander ausgerichtet bleiben und eine mehr oder weniger starke Einstandsbewegung zwischen den Kammelektroden ermöglichen.

Zwischen dem ersten und zweiten Anschlusselement der Drehkupplung ist gemäß einer bevorzugten Ausgestaltung ein Luftspalt vorgesehen. Dadurch kann eine reibungsfreie Anordnung zwischen dem Schaft und dem Krafteinleitungsabschnitt des Eindringkörpers gegeben sein. Alternativ kann zumindest ein reibungsarmes Gleitelement zwischen dem ersten und zweiten Anschlusselement vorgesehen sein. Des Weiteren kann alternativ vorgesehen sein, dass zwei einander zugeordnete Stirnseiten der Anschlusselemente reibungsarme Oberflächen aufweisen, so dass während der Einleitung einer Eindringkraft auf den Eindringkörper sowie auch nach dem erfolgten Eindringen des Eindringkörpers in die Materialoberfläche ein Drehantrieb des Schaftes ermöglicht ist.

Eine weitere bevorzugte Ausgestaltung der Erfindung sieht vor, dass der Krafteinleitungsabschnitt des Eindringkörpers aus einem elektrisch isolierenden Material ausgebildet ist. Dadurch wird ermöglicht, dass an dem Krafteinleitungsabschnitt unmittelbar eine elektrische Leitung angebracht werden kann, um den mikromechanischen Bewegungsaktuator mit Spannung zu versorgen, so dass keine freien Anschlussleitungen vorgesehen sind, welche nachteilig das Messergebnis beeinflussen könnten.

Nach einer weiteren vorteilhaften Ausgestaltung der Erfindung ist vorgesehen, dass der Eindringkörper, insbesondere der Krafteinleitungsabschnitt, von zumindest einem Federelement aufgenommen und in Aufsetzrichtung des Eindringkörpers auslenkbar gehalten und das zumindest eine Federelement aus elektrisch leitendem Material als Teil der Anschlussleitung des mikromechanischen Bewegungsaktuators ausgebildet ist. Dadurch kann eine Reduzierung der Bauteile und der bewegten Massen erzielt werden. Bevorzugt wird zumindest ein Blattfederelement eingesetzt.

Die Erfindung ist des Weiteren durch ein Verfahren zur Messung von mechanischen Eigenschaften von Materialien nach Anspruch 10 gelöst, bei dem während oder nach dem Eindringen des Eindringkörpers in die Materialoberfläche zumindest ein mikromechanischer Bewegungsaktuator, der zwischen einem Kraftaufnahmeabschnitt und einem Schaft des Eindringkörpers positioniert ist, angesteuert wird und zumindest eine Drehbewegung des Schaftes relativ zum Kraftaufnahmeabschnitt des Eindringkörpers einleitet oder eine Drehbewegung erfasst oder eine Drehbewegung einleitet und erfasst. Dadurch können zusätzliche Daten bezüglich der Materialeigenschaften gewonnen werden, wobei bevorzugt eine Materialbeanspruchung im elastischen Bereich des Materials vorgesehen ist. Aufgrund der benötigten Kraft für die Drehbewegung beziehungsweise die Erfassung der Winkelgrade der angesteuerten Drehbewegung ist zusammen mit der erzeugten Kraft zum Eindringen des Eindringkörpers in die Messoberfläche des Messgegenstandes als auch der des erfassten Weges eine Ermittlung der Materialeigenschaft ermöglicht. Ein solches Verfahren zur Messung von mechanischen Eigenschaften weist gegenüber einem Verfahren, bei welchem ein lateraler Kammantriebsaktuator und ein transversaler Kammantriebsaktuator zur Messung von mechanischen Eigenschaften von Materialien eingesetzt werden, den Vorteil auf, dass die Kraftaufbringung an einer definierten Oberfläche und unter stetem Kontakt zur gesamten Oberfläche des Eindringkörpers stattfindet und sich die Konstruktion und technische Umsetzung vereinfacht; bei gleichzeitiger Minimierung der störenden bewegten Masse.

Nach einer weiteren bevorzugten Ausgestaltung der Erfindung ist vorgesehen, dass der als drehantreibbarer Kammantriebsaktuator ausgebildete mikromechanische Bewegungsaktuator zur Messung der mechanischen Eigenschaften in Drehvibration versetzt wird. Dadurch können frequenzselektive Signale insbesondere in der Entlastungsphase erfasst und für die Eigenschaftsermittlung der Materialien ausgewertet werden.

Nach einer weiteren bevorzugten Ausgestaltung der Erfindung ist vorgesehen, dass der Eindringkörper mit einer kontinuierlichen Kraft durch die Einrichtung zur Krafterzeugung beaufschlagt wird. Dabei kann eine Überlagerung der Drehvibration durch den mikromechanischen Bewegungsaktuator erfolgen, wobei diese Drehvibration vorzugsweise periodisch erfolgt. Alternativ kann auch eine aperiodische Drehvibration eingeleitet werden.

Nach einer alternativen Ausgestaltung des Verfahrens ist vorgesehen, dass der Eindringkörper mit einer diskontinuierlichen oder stufenförmigen Kraft durch die Einrichtung zur Krafterzeugung beaufschlagt wird. Ebenso kann bei einem solchen Eindringverhalten die Drehvibration periodisch oder aperiodisch eingeleitet und der Eindringbewegung überlagert werden.

Des Weiteren kann alternativ vorgesehen sein, dass nach dem Abschluss der Eindringphase des Schaftes in die Materialoberfläche eine Drehvibration, insbesondere eine periodische Drehvibration, angesteuert wird. Dadurch kann in gewissem Maße das Relaxationsverhalten des Materials mit berücksichtigt werden. Eine aperiodische Drehvibration ist ebenfalls ermöglicht.

Eine weitere vorteilhafte Ausgestaltung des Verfahrens sieht vor, dass während einer Entlastungsphase der Drehbewegung von dem Schaft in der Materialoberfläche Signale durch den Kammantriebsaktuator erfasst und durch eine Auswerteeinheit ausgewertet werden, womit eine hochgenaue und kontinuierliche Positionsbestimmung des Drehwinkels vom Eindringkörper ermöglicht wird.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Schnittansicht einer erfindungsgemäßen Vorrichtung zur Messung von mechanischen Eigenschaften von Materialien,
- Figur 2: eine schematisch vergrößerte Ansicht eines Eindringkörpers der Vorrichtung gemäß Figur 1,
- Figur 3: eine schematische Ansicht auf einen am Krafteinleitungsabschnitt des Eindringkörpers angeordneten mikromechanischen Bewegungsaktuator sowie eine Drehkupplung und
- Figur 4: eine perspektivische Ansicht des mikromechanischen Bewegungsaktuators mit einer Drehkupplung.

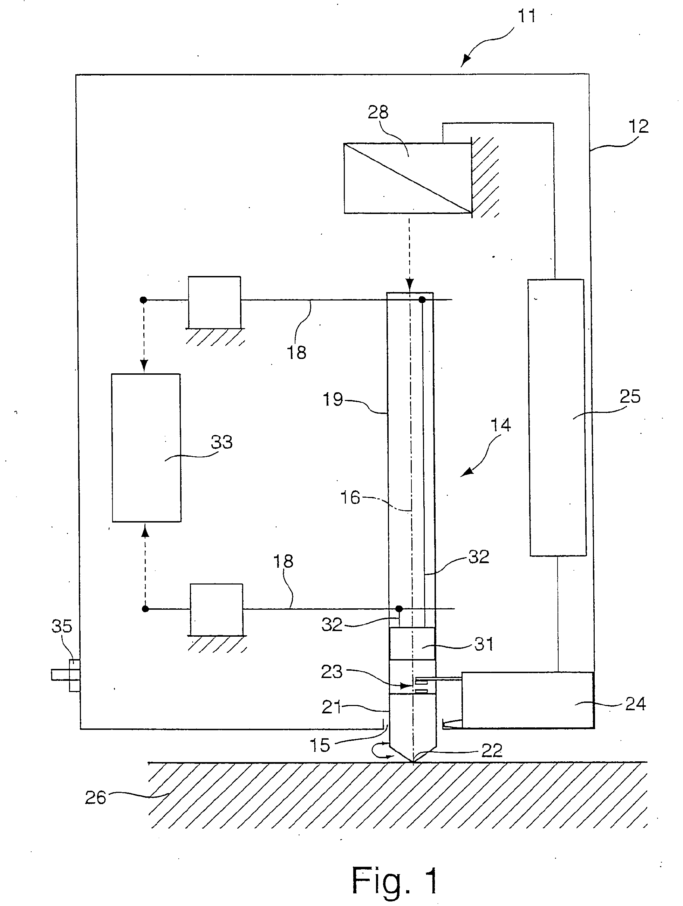

In Figur 1 ist schematisch eine Vorrichtung 11 zur Messung von mechanischen Eigenschaften von Materialien dargestellt. Die Vorrichtung 11 umfasst ein Gehäuse 12, welches an einer nicht näher dargestellten Halteeinrichtung, insbesondere einem Stativ, angeordnet ist. In dem Gehäuse 12 ist ein Eindringkörper 14 vorgesehen, der durch eine Gehäuseöffnung 15 nach außen tritt und vorzugsweise durch diese Gehäuseführung axial entlang seiner Längsachse 16 geführt ist. Der Eindringkörper 14 ist durch zumindest eine, vorzugsweise zwei, parallel zueinander angeordnetes Federelement 18, insbesondere Blattfedern, aufgenommen, wobei vorzugsweise diese Federelemente 18 derart zueinander eingestellt sind, dass der Eindringkörper 14 quasi kraftfrei schwebend in einer Ausgangslage beziehungsweise nicht ausgelenkten Lage angeordnet ist. Der Eindringkörper 14 ist zumindest zweiteilig ausgebildet und weist einen Krafteinleitungsabschnitt 19 und einen Schaft 21 auf. An dem Krafteinleitungsabschnitt 19, der vorzugsweise als zylindrischer Körper oder als Röhrchen ausgebildet sein kann, greifen die beiden Federelemente 18 an, wobei die als Blattfedern ausgebildeten Federelemente 18 relativ zur Längsachse 16 des Eindringkörpers 14 auslenkbar sind.

Der Schaft 21 des Eindringkörpers 14 umfasst eine Eindringkörperspitze 22, welche in Abhängigkeit des durchzuführenden Härtemessverfahrens eine entsprechend geometrische Ausgestaltung umfasst. Die Eindringkörperspitze 22 kann pyramidenförmig, insbesondere aus Diamant oder kugelförmig, insbesondere aus gehärtetem Stahl, ausgebildet sein. Weitere geometrische Ausgestaltungen der Eindringkörperspitze 22 sind ebenfalls möglich. Am Schaft 21 ist mit Abstand zur Eindringkörperspitze 22 bevorzugt innerhalb des Gehäuses 12 ein Sensor 23 vorgesehen, der Teil einer Einrichtung 24 zur Messung der Eindringtiefe ist. Dadurch kann der durch die Eindringspitze 22 tatsächlich erfolgte Weg beziehungsweise die tatsächlich erzielte Eindringtiefe in die Materialoberfläche eines Messgegenstandes 26 erfasst werden. Die Einrichtung 24 zur Messung der Eindringtiefe steht mit einer Elektronik eines Härtemesssystems 25 in Verbindung. Ebenso kommuniziert mit dieser Elektronik für die Härtemessung 25 eine Einrichtung 28 zur Krafterzeugung, durch welche der Eindringkörper 14 auf die Messoberfläche des Messgegenstandes 26 zubewegt und eine Eindringbewegung durchgeführt wird. Diese Einrichtung 28 greift bevorzugt an einem der Eindringkörperspitze 22 gegenüberliegenden Ende des Eindringkörpers 14 an.

Zwischen dem Krafteinleitungsabschnitt 19 und dem Schaft 21 des Eindringkörpers 14 ist ein mikromechanischer Bewegungsaktuator 31 vorgesehen, durch welchen der Schaft 21 um die Längsachse 16 des Eindringkörpers 14 radial auslenkbar ist. Die Ansteuerung des mikromechanischen Bewegungsaktuators 31 erfolgt über elektrische Anschlussleitungen 32, welche durch den Krafteinleitungsabschnitt 19 zum mikromechanischen Bewegungsaktuator 31 zugeführt werden. Dabei ist bevorzugt vorgesehen, dass der Krafteinleitungsabschnitt 19 isoliert ausgebildet ist, so dass die Federelemente 18 durch eine Elektronik 33 im Gehäuse elektrisch kontaktierbar sind. Vom Angriffspunkt der Federelemente 18 am Krafteinleitungsabschnitt 19 bis zum mikromechanischen Bewegungsaktuator 31 sind am Krafteinleitungsabschnitt 19 befestigte oder integrierte elektrische Anschlussleitungen 32 vorgesehen, wodurch der Anteil an bewegten Massen verringert und weitere Störeinflüsse ausgeschlossen werden. Die Elektronik 33 dient zur Ansteuerung des mikromechanischen Bewegungsaktuators 31 und steht mit der Elektronik des Härtemesssystems 25 und/oder Einrichtung 28 zur Krafterzeugung in Verbindung. Die Vorrichtung 11 wird durch einen symbolisch dargestellten elektrischen Anschluss 35 versorgt. Zusätzlich können weitere Anschlüsse oder Schnittstellen zum Anschluss von Auswerteeinheiten und/oder Computern zur Steuerung der Vorrichtung und zum Auslesen von Daten und/oder Signalen vorgesehen sein.

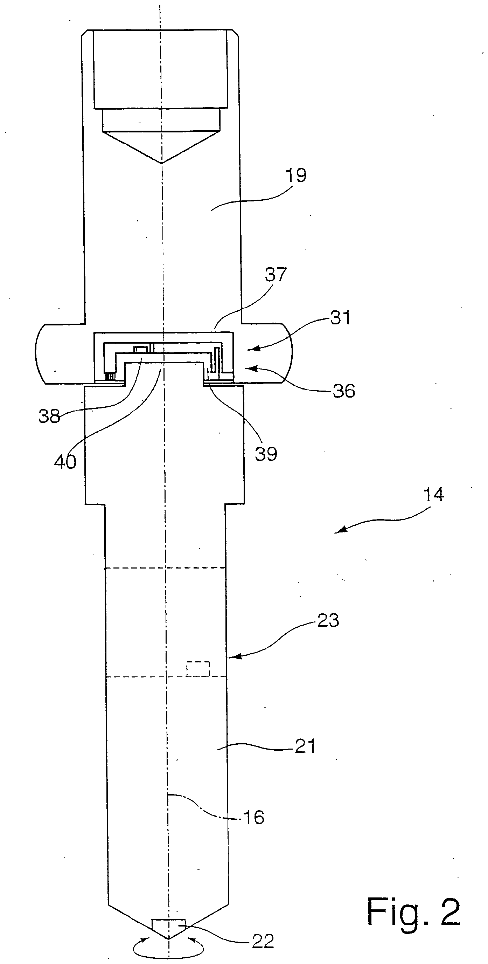

In Figur 2 ist schematisch vergrößert der Eindringkörper 14 dargestellt. Der Krafteinleitungsabschnitt 19 ist über eine Drehkupplung 36 unmittelbar mit dem Schaft 21 verbunden, wobei die Drehkupplung 36 derart ausgebildet ist, dass diese in axialer Richtung beziehungsweise entlang der Längsachse 16 des Eindringkörpers 14 drucksteif ausgebildet ist und in radialer Richtung eine Auslenkung in beide Drehrichtungen, vorzugsweise in gleichem Maße, ermöglicht. Die Drehkupplung 36 weist ein erstes Anschlusselement 37 auf, welches beispielsweise topfförmig ausgebildet und in eine Vertiefung am Krafteinleitungsabschnitt 19 eingesetzt oder befestigt ist. Dem ersten Anschlusselement 37 zugeordnet ist ein zweites Anschlusselement 38 vorgesehen, welches einen Befestigungsabschnitt 39 aufweist, in dem beispielsweise ein Zapfen 40 des Schaftes 21 eingreift und darin zentriert gehalten ist. Alternative geometrische Ausgestaltungen der Anschlusselemente 37, 38 als auch eine Umkehrung in der Anordnung und Aufnahme der jeweiligen Elemente des Eindringkörpers 14 sind ebenso möglich. Der mikromechanische Bewegungsaktuator 31 ist an der Drehkupplung 36 integriert oder ist an dem ersten und zweiten Anschlusselement 37, 38 angeordnet, um eine relative Verdrehung des zweiten Anschlusselementes 38 zum ersten Anschlusselement 37 zu erzeugen.

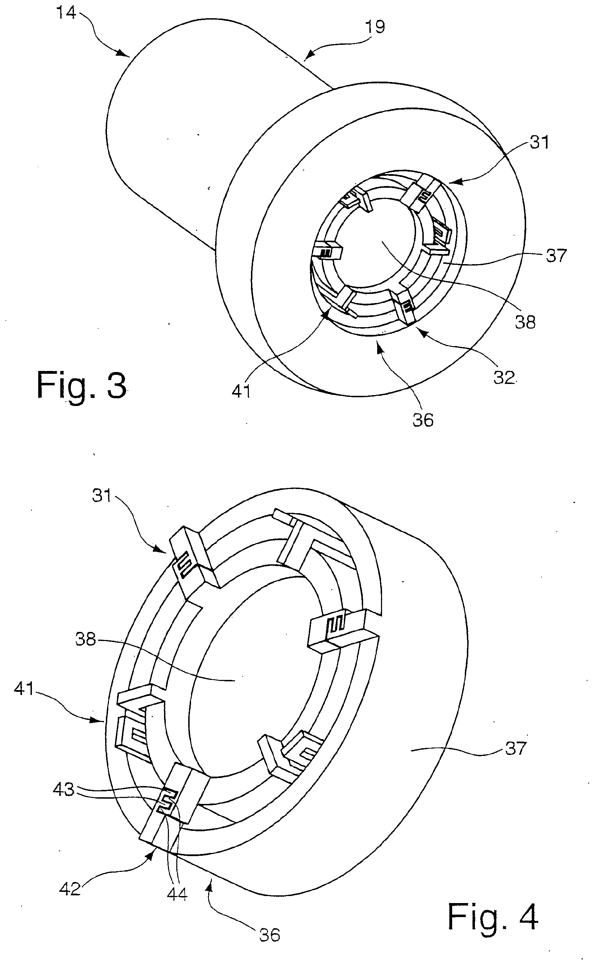

In den Figuren 3 und 4 ist schematisch vergrößert eine Ansicht der Drehkupplung 36 mit dem mikromechanischen Bewegungsaktuator 31 dargestellt. Das erste und zweite Anschlusselement 37, 38 ist jeweils durch ein federelastisches Verbindungsglied 41 verbunden. Dieses federelastische Verbindungsglied 41 weist eine mäanderförmige Rechteckstruktur auf, die eine radiale Verdrehung des zweiten Anschlusselementes 38 zum ersten Anschlusselement 37 ermöglicht, jedoch in axialer Richtung einen zwischen dem ersten Anschlusselement und zweiten Anschlusselement 37, 38 gebildeten Abstand während der Krafteinleitung für eine Eindringbewegung des Eindringkörpers 14 konstant hält. Bevorzugt sind die einzelnen Stegabschnitte des Verbindungsgliedes mit quadratischen Querschnitten ausgebildet. Weitere, die Funktion der Drehkupplung erfüllende Geometrien und Ausgestaltungen der Verbindungsglieder 41 sind ebenfalls denkbar.

Der mikromechanische Bewegungsaktuator 31 ist vorteilhafterweise als Kammantriebsaktuator 42 ausgebildet. Beispielsweise sind drei Kammantriebsaktuatoren 42 zwischen den Verbindungsgliedern 41 angeordnet, wobei vorzugsweise die Verbindungsglieder 41 und die Kammantriebsaktuatoren 42 in gleichem Winkel zueinander über den Umfang verteilt angeordnet sind. Der Kammantriebsaktuator 42 weist Kammfinger 43 auf, die zwischen Kammelektroden 44 angeordnet sind. Durch die Ansteuerung der Kammantriebsaktuatoren 42 kann erzielt werden, dass die Kammfinger 43 bezüglich deren Eintauchtiefe relativ zu den Kammelektroden 44 bewegbar sind und in Abhängigkeit der Eintauchtiefe eine Spannung induziert wird, welche für die Messung der Drehbewegung dient und entsprechend mit weiteren Parametern der Einrichtung 24, 28 zur Messung der Eindringtiefe und der Krafterzeugung ausgewertet wird.

Der Kammantriebsaktuator 42 kann durch ein LIGA-Verfahren hergestellt werden. Diese Abkürzung "LIGA" steht für die Verfahrensschritte Lithographie, Galvanik und Abformung und bezeichnet ein Verfahren, welches auf einer Kombination von Tiefenlithographie, Galvanik und Mikroabformen basiert. Dadurch können Mikrostrukturen mit kleinsten Abmessungen bis zu 0,2 µm und Strukturen bis zu 3 mm in einem Aspektverhältnis bis 50 den Materialien Kunststoff, Metall und Keramik erzielt werden. Des Weiteren kann der Kammantriebsaktuator als MEMS-Struktur ausgebildet sein. Beide Ausgestaltungen ermöglichen, dass der Eindringkörper als Mikro- oder Nanoindentor ausgebildet werden kann.

Der Einsatz eines solchen Kammantriebes 42, der eine Drehbewegung einleitet beziehungsweise eine radiale Auslenkung des Schaftes 21 gegenüber dem Krafteinleitungsabschnitt 19 bewirkt, weist den Vorteil auf, dass sowohl die Krafterzeugung und/oder die Messung des Winkels der radialen Auslenkung in einem Sensor erfolgen kann, wodurch eine kleinbauende Anordnung und eine Verringerung der Fehlerquellen für die Messung ermöglicht ist. Des Weiteren weist die erfindungsgemäße Ausgestaltung der Vorrichtung mit einem zumindest zweiteiligen Eindringkörper, der einen mikromechanischen Bewegungsaktuator umfasst, den Vorteil auf, dass sowohl eine Härtemessung als auch eine Materialprüfung ermöglicht ist.

Die erfindungsgemäße Vorrichtung ermöglicht die Durchführung von verschiedenen Verfahren zur Messung und Ermittlung als auch zur Prüfung von mechanischen Eigenschaften von Materialien.

Beispielsweise kann vorgesehen sein, dass bis zum Aufsetzen des Eindringkörpers 14 auf der Materialoberfläche des Messgegenstandes 26 der mikromechanische Bewegungsaktuator 31 nicht angesteuert wird. Sobald ein Eindringen des Eindringkörpers 14 in den Messgegenstand 26 erfolgt oder nach dem vollständigen Eindringen des Eindringkörpers 14 in den Messgegenstand 26, wird der mikromechanische Bewegungsaktuator 31 angesteuert, so dass der Schaft 21 relativ zum Krafteinleitungsabschnitt 19 insbesondere in Drehvibration versetzt wird und eine radiale Auslenkung erfährt. Dabei kann die Krafteinleitung zur Durchführung einer Auslenkung erfasst werden. Alternativ kann eine Drehbewegung eingeleitet und durchgeführte Drehbewegung gemessen werden oder es können beide Werte durch die Messung erfasst werden. Diese werden zusammen mit der aufgebrachten Kraft zur Erzeugung einer Eindringbewegung des Eindringkörpers in einer Auswerteeinheit erfasst und ausgewertet. Aus den gewonnenen Messgrößen können entsprechende mechanische Eigenschaften des Materials, aus dem der Messgegenstand besteht, ermittelt werden.

Eine alternative Ausgestaltung des Verfahrens sieht vor, dass der mikromechanische Bewegungsaktuator 31 während oder nach dem Eindringen des Eindringkörpers 14 in den Messgegenstand 26 in die Drehvibration versetzt wird. Dabei wird bevorzugt die Reaktion gemessen und eine daraus resultierende Phasenverschiebung während der Entlastungsphase erfasst und ausgewertet.

Alternativ kann vorgesehen sein, dass eine kontinuierliche Kraftzunahme, beispielsweise durch einen Gleichstrom, insbesondere einer periodischen Drehbewegung überlagert wird. Alternativ kann auch eine aperiodische Drehbewegung erzeugt werden.

Nach einer weiteren alternativen Ausgestaltung der Erfindung ist vorgesehen, dass anstelle einer kontinuierlichen Kraftzunahme eine diskontinuierliche oder quasi stufenförmige Kraftzunahme erfolgt, wobei beispielsweise bei jeder Stufe der Kraftzunahme zumindest eine radiale Auslenkung zugeordnet werden kann. In Abhängigkeit der jeweiligen zu prüfenden Materialien kann das Verfahren zur Messung von mechanischen Eigenschaften angepasst werden.

## Patentansprüche

1. Vorrichtung zur Messung von mechanischen Eigenschaften von Materialien, umfassend
- einen Eindringkörper (14) mit einer Eindringkörperspitze (22), die eine vorbestimmte Geometrie aufweist,
- eine Einrichtung (28) zur Krafterzeugung, mittels dieser der Eindringkörper (14) in eine zu messende Materialoberfläche eines Messgegenstandes (26) eindringt und
- eine Einrichtung (24) zur Messung der Eindringtiefe,
**dadurch gekennzeichnet,**
- **dass** der Eindringkörper (14) zwischen einem Krafteinleitungsabschnitt (19),
an dem die Einrichtung (28) zur Krafterzeugung angreift, und einem Schaft (21) mit der zur Materialoberfläche des Messgegenstandes (26) weisenden Eindringkörperspitze (22) zumindest einen mikromechanischen Bewegungsaktuator (31) aufweist, durch den eine Entkopplung einer Drehbewegung des Schaftes (21) zum Krafteinleitungsabschnitt (19) während oder nach der Eindringbewegung des Eindringkörpers (14) senkrecht zur Materialoberfläche des Messgegenstandes (26) erfolgt
und durch den die zumindest eine Drehbewegung des Schaftes (21) um seine Längsachse (16) gegenüber dem Kraftaufnahmeabschnitt (19) des Eindringkörpers (14) ansteuerbar oder erfassbar ist.

2. Vorrichtung nach Anspruch 1, **dadurch gekennzeichnet, dass** der mikromechanische Bewegungsaktuator (31) als zumindest ein drehantreibbarer Kammantriebsaktuator (42) ausgebildet ist.

3. Vorrichtung nach Anspruch 2, **dadurch gekennzeichnet, dass** der drehantreibbare Kammantriebsaktuator (41) nach einem LIGA-Verfahren oder einem MEMS-System hergestellt ist.

4. Vorrichtung nach Anspruch 1, **dadurch gekennzeichnet, dass** der Eindringkörper (14) zumindest zweiteilig ausgebildet ist und zwischen dem Schaft (21) und dem Krafteinleitungsabschnitt (19) eine Drehkupplung (36) vorgesehen ist, welche in der Längsachse (16) des Eindringkörpers (14) drucksteif und radial zur Längsachse (16) auslenkbar ausgebildet ist.

5. Vorrichtung nach Anspruch 4, **dadurch gekennzeichnet, dass** die Drehkupplung (36) ein erstes Anschlusselement (37) zur Aufnahme des Schaftes (21) und ein zweites Anschlusselement (38) zur Aufnahme des Kraftaufnahmeabschnitts (19) aufweist und dass vorzugsweise das erste und zweite Anschlusselement (37, 38) durch mehrere über den Umfang verteilt angeordnete federelastische Verbindungsglieder (41) in radialer Richtung verdrehbar und in axialer Richtung mit gleichbleibendem oder nahezu gleichbleibendem Abstand zueinander angeordnet sind.

6. Vorrichtung nach Anspruch 5, **dadurch gekennzeichnet, dass** zwischen zwei federelastischen Verbindungsgliedern (41) zumindest ein drehantreibbarer Kammantriebsaktuator (42) vorgesehen ist.

7. Vorrichtung nach Anspruch 5 oder 6, **dadurch gekennzeichnet, dass** zwischen dem ersten und zweiten Anschlusselement (37, 38) ein Luftspalt ausgebildet ist oder zumindest ein reibungsarmes Gleitelement vorgesehen ist oder die einander zugeordneten Stirnseiten der Anschlusselemente (37, 38) gleitreibungsarme Oberflächen aufweist.

8. Vorrichtung nach Anspruch 1, **dadurch gekennzeichnet, dass** der Krafteinleitungsabschnitt (19) des Eindringkörpers (14) aus einem elektrisch isolierendem Material ausgebildet ist.

9. Vorrichtung nach Anspruch 1, **dadurch gekennzeichnet, dass** der Eindringkörper (14), insbesondere der Krafteinleitungsabschnitt (19), von zumindest einem Federelement (18) aufgenommen und in Aufsetzrichtung des Eindringkörpers (14) auslenkbar gehalten ist und dass das zumindest eine Federelement (18) elektrisch leitend als Teil einer elektrischen Anschlussleitung (32) des mikromechanischen Bewegungsaktuators (31) ausgebildet ist.

10. Verfahren zur Messung von mechanischen Eigenschaften von Materialien,
- bei dem ein Eindringkörper (14) mit einer vorbestimmten Geometrie in eine zu messende Materialoberfläche eines Messgegenstandes (26) mit einer vorbestimmten Kraft einer Einrichtung (28) zur Krafterzeugung eindringt und
- bei der mit einer Einrichtung (24) zur Messung der Eindringtiefe in die Materialoberfläche des Messgegenstandes (26) die Eindringtiefe des Eindringkörpers (14) erfasst wird,
**dadurch gekennzeichnet,**
- **dass** während oder nach dem Eindringen des Eindringkörpers (14) in die Materialoberfläche des Messgegenstandes (26) zumindest ein mikromechanischer Bewegungsaktuator (31), der zwischen einem Kraftaufnahmeabschnitt (19) und einem Schaft (21) des Eindringkörpers (21) positioniert ist und durch den eine Drehbewegung des Schaftes (21) zur Eindringbewegung des Eindringkörpers (14) senkrecht zur Materialoberfläche des Messgegenstandes (26) entkoppelt wird, angesteuert wird und
- **dass** die zumindest eine Drehbewegung des Schaftes (21) um seine Längsachse (16) relativ zum Kraftaufnahmeabschnitt (19) des Eindringkörpers (14) eingeleitet oder die Drehbewegung erfasst wird oder die Drehbewegung eingeleitet und erfasst wird.

11. Verfahren nach Anspruch 10, **dadurch gekennzeichnet, dass** der mikromechanische Bewegungsaktuator (31), der als zumindest ein drehantreibbarer Kammantriebsaktuator (42) zur Messung der mechanischen Eigenschaften in Drehvibration, insbesondere in eine periodische Drehvibration, versetzt wird.

12. Verfahren nach Anspruch 10 oder 11, **dadurch gekennzeichnet, dass** der Eindringkörper (14) mit einer kontinuierlichen Kraft durch die Einrichtung (28) zur Krafterzeugung beaufschlagt wird.

13. Verfahren nach Anspruch 10 oder 12, **dadurch gekennzeichnet, dass** der Eindringkörper (14) mit einer diskontinuierlichen oder stufenförmigen Kraft durch die Einrichtung (28) zur Krafterzeugung beaufschlagt wird.

14. Verfahren nach Anspruch 10, **dadurch gekennzeichnet, dass** während einer Entlastungsphase der eingeleiteten Drehbewegung des Schaftes (21) in der Materialoberfläche des Messgegenstandes (26) von dem Schaft (21) Signale durch den mikromechanischen Bewegungsaktuator (31) erfasst und durch eine Auswerteeinheit ausgewertet werden.

## Claims

1. An apparatus for measuring mechanical properties of materials, having
- an indenter (14) with an indenter tip (22) which has a predetermined geometry,
- a device (28) for generating force with which the indenter (14) penetrates into a material sample surface of an object of measurement (26), and
- a device (24) for measuring the penetration depth,
**characterised in that**
- arranged between a force application portion (19) on which the device (28) for generating force is applied and a shaft (21) with an indenter tip (22) facing towards the material surface of the object of measurement (26), the indenter (14) has at least one micro-mechanical motion actuator (31) by which a decoupling of a rotational movement of the shaft (21) for the force absorption portion (19) during or after the penetration movement of the indenter (14) normally to the material surface of the object of measurement (26) is provided and the at least one radial deflection of the shaft (21) around his longitudinal axis (16) relative to the force application position (19) is capable of being activated or detected.

2. The apparatus of claim 1, **characterised in that** the micro-mechanical motion actuator (31) is realized as at least one rotationally drivable comb-drive actuator (42).

3. The apparatus of claim 2, **characterised in that** the rotationally drivable comb-drive actuator (41) is fabricated according to a LIGA process or as a MEMS system.

4. The apparatus according to claim 1, **characterised in that** the indenter (14) is realised in at least two parts, and that a rotating joint (36) is provided between the shaft (21) and the force application portion (19), said joint being realised so as to be rigid in the longitudinal axis (16) of the indenter (14) when under compression and capable of being deflected radially with respect to said longitudinal axis (16).

5. The apparatus of claim 4, **characterised in that** the rotating joint (36) has a first connecting member (37) for receiving the shaft (21) and a second connecting member (38) for accommodating the force absorption portion (19), and that the first and second connecting members (37, 38), by means of several circumferentially arranged, resilient coupling links (41), are preferably capable of being disposed in such a manner as to be rotatable in the radial direction while remaining at a constant distance, or an almost constant distance, from one another in the axial direction.

6. The apparatus of claim 5, **characterised in that** between two resilient coupling links (41) there is provided at least one rotationally drivable comb-drive actuator (42).

7. The apparatus of claim 5 or 6, **characterised in that** between the first and second connecting members (37, 38) an air gap is formed or at least one low-friction sliding element is provided, or the end faces of the connecting members (37, 38) associated with each other are provided with low-friction surfaces.

8. The apparatus of claim 1, **characterised in that** the force application portion (19) of the indenter (14) is formed of an electrically insulating material.

9. The apparatus of claim 1, **characterised in that** the indenter (14), in particular the force application portion (19), is received by at least one spring member (18) and held so as to be capable of being deflected in the mounting direction of the indenter (14), and that the at least one spring member (18) is realised so as to be electrically conductive, thus forming a part of an electric power supply cord (32) of the micro-mechanical motion actuator (31).

10. A method for measuring mechanical properties of materials,
- wherein an indenter (14) with a predetermined geometry penetrates into a material sample surface of an object of measurement (26) with a predetermined force of a device (28) for generating force, and
- wherein the penetration depth of the indenter (14) is detected using a device (24) for measuring the penetration depth in the material surface of the object of measurement (26),
**characterised in that**
- during or after the penetration of the indenter (14) into the material surface of the object of measurement (26) at least one micro-mechanical motion actuator (31), which is positioned between a force absorption portion (19) and a shaft (21) of the indenter (14) and is decoupled by a radial deflection of the shaft (21) relative to the penetration movement at the indenter (14) normally to the material surface of the object of the measurement (26), is activated, and
- at least one radial deflection of the shaft (21) relative to the force absorption portion (19) of the indenter (14) is initiated or a rotational movement is detected or a rotational movement is initiated and detected.

11. The apparatus of claim 10, **characterised in that** for measuring the mechanical properties, a rotational vibration, in particular a periodic rotational vibration, is conveyed to the micro-mechanical motion actuator (31) realised as at least one rotationally drivable comb-drive actuator (42).

12. The method according to claim 10 or 11, **characterised in that** a continuous force is applied to the indenter (14) by the device (28) for generating force.

13. The method according to claim 10 or 12, **characterised in that** a discontinuous or stepped force is applied to the indenter (14) by the device (28) for generating force.

14. The method of claim 10, **characterised in that** during the unloading phase of the introduced rotational movement of the shaft (21) applied to the material surface of the object of measurement (26) signals from the shaft (21) are detected by the micro-mechanical motion actuator (31) and are evaluated by an evaluation unit.

## Revendications

1. Dispositif destiné à mesurer des propriétés mécaniques de matériaux, lequel comprend :
- un corps de pénétration (14) pourvu d'une pointe de corps de pénétration (22) qui présente une géométrie prédéterminée,
- un dispositif (28) servant à la génération de force grâce auquel le corps de pénétration (14) pénètre dans une surface de matériau à mesurer d'un objet de mesure (26) et
- un dispositif (24) destiné à mesurer la profondeur de pénétration,
**caractérisé en ce que**
- le corps de pénétration (14) présente, entre une partie d'application de force (19) contre laquelle appuie le dispositif (28) servant à la génération de force et une tige (21) pourvue de la pointe de corps de pénétration (22) dirigée vers la surface de matériau de l'objet de mesure (26), au moins un actionneur de mouvement micromécanique (31) par l'intermédiaire duquel un découplage d'un mouvement de rotation de la tige (21) par rapport à la partie d'application de force (19) se produit, et ce pendant ou après le mouvement de pénétration du corps de pénétration (14) perpendiculairement à la surface de matériau de l'objet de mesure (26), et grâce auquel ledit au moins un mouvement de rotation de la tige (21) autour de son axe longitudinal (16) peut être activé ou saisi par rapport à la partie de réception de force (19) du corps de pénétration (14).

2. Dispositif selon la revendication 1, **caractérisé en ce que** l'actionneur de mouvement micromécanique (31) est réalisé sous la forme d'au moins un actionneur d'entraînement à peigne (42) pouvant être entraîné en rotation.

3. Dispositif selon la revendication 2, **caractérisé en ce que** l'actionneur d'entraînement à peigne (41) pouvant être entraîné en rotation est fabriqué selon un procédé LIGA ou un microsystème électromécanique (MEMS) .

4. Dispositif selon la revendication 1, **caractérisé en ce que** le corps de pénétration (14) est réalisé au moins en deux pièces et **en ce qu'**entre la tige (21) et la partie d'application de force (19) est prévu un accouplement rotatif (36) qui est formé de manière à résister à la compression dans l'axe longitudinal (16) du corps de pénétration (14) et de manière à pouvoir dévier radialement par rapport audit axe longitudinal (16).

5. Dispositif selon la revendication 4, **caractérisé en ce que** l'accouplement rotatif (36) présente un premier élément de raccordement (37) permettant de recevoir la tige (21) et un deuxième élément de raccordement (38) permettant de recevoir la partie de réception de force (19), et **en ce que** de préférence les premier et deuxième éléments de raccordement (37, 38) peuvent tourner en direction radiale grâce à plusieurs éléments de liaison (41) flexibles répartis sur la circonférence et sont disposés en direction axiale de manière à garder entre eux un espacement constant ou quasiment constant.

6. Dispositif selon la revendication 5, **caractérisé en ce qu'**au moins un actionneur d'entraînement à peigne (42) pouvant être entraîné en rotation est prévu entre deux éléments de liaison (41) flexibles.

7. Dispositif selon la revendication 5 ou 6, **caractérisé en ce qu'**entre le premier et le deuxième élément de raccordement (37, 38) est formé un espace d'air ou est prévu au moins un élément de glissement à faible frottement, ou **en ce que** les faces frontales associées des éléments de raccordement (37, 38) présentent des surfaces à faible frottement de glissement.

8. Dispositif selon la revendication 1, **caractérisé en ce que** la partie d'application de force (19) du corps de pénétration (14) est formée en un matériau isolant électrique.

9. Dispositif selon la revendication 1, **caractérisé en ce que** le corps de pénétration (14), en particulier la partie d'application de force (19), est reçu par au moins un élément élastique (18) et est maintenu dans le sens de positionnement du corps de pénétration (14) de manière à pouvoir dévier, et **en ce que** ledit au moins un élément élastique (18) est formé de manière à être électroconducteur en tant que partie d'une ligne de raccordement électrique (32) de l'actionneur de mouvement micromécanique (31).

10. Procédé destiné à mesurer des propriétés mécaniques de matériaux,
- lors duquel un corps de pénétration (14) présentant une géométrie prédéterminée pénètre dans une surface de matériau à mesurer d'un objet de mesure (26) avec une force prédéterminée d'un dispositif (28) servant à la génération de force et
- lors duquel la profondeur de pénétration du corps de pénétration (14) est saisie grâce à un dispositif (24) destiné à mesurer la profondeur de pénétration dans la surface de matériau de l'objet de mesure (26),
**caractérisé en ce que**
- pendant ou après la pénétration du corps de pénétration (14) dans la surface de matériau de l'objet de mesure (26) est activé au moins un actionneur de mouvement micromécanique (31) qui est positionné entre une partie de réception de force (19) et une tige (21) du corps de pénétration (21) et grâce auquel un mouvement de rotation de la tige (21) est découplé par rapport au mouvement de pénétration du corps de pénétration (14), et ce perpendiculairement à la surface de matériau de l'objet de mesure (26) et
- ledit au moins un mouvement de rotation de la tige (21) autour de son axe longitudinal (16) est appliqué à la partie de réception de force (19) du corps de pénétration (14), ou le mouvement de rotation est saisi, ou le mouvement de rotation est appliqué et saisi.

11. Procédé selon la revendication 10, **caractérisé en ce que** l'actionneur de mouvement micromécanique (31), réalisé sous la forme d'au moins un actionneur d'entraînement à peigne (42) pouvant être entraîné en rotation, est mis en vibration rotationnelle, en particulier en vibration rotationnelle périodique, en vue de mesurer les propriétés mécaniques.

12. Procédé selon la revendication 10 ou 11, **caractérisé en ce que** le corps de pénétration (14) est soumis à une force continue par le dispositif (28) servant à la génération de force.

13. Procédé selon la revendication 10 ou 12, **caractérisé en ce que** le corps de pénétration (14) est soumis à une force discontinue ou graduelle par le dispositif (28) servant à la génération de force.

14. Procédé selon la revendication 10, **caractérisé en ce que** pendant une phase de décharge ayant lieu au niveau de la surface de matériau de l'objet de mesure (26) après l'application du mouvement de rotation de la tige (21), des signaux sont saisis par la tige (21) grâce à l'actionneur de mouvement micromécanique (31) et sont évalués par une unité d'évaluation.
